# FASCICULE DE BREVET EUROPEEN

(11) **EP 2 510 050 B1**
(45) Date de publication et mention de la délivrance du brevet: **12.02.2014**
(21) Numéro de dépôt: 10813104.6
(22) Date de dépôt: 06.12.2010
(51) Int. Cl.: C08L 27/04, C08L 33/00, C08K 3/26

(54) **UTILISATION DE POLYMÈRES AMPHIPHILES COMME AGENTS AMÉLIORANT LA STABILITÉ THERMIQUE ET LA RÉSISTANCE AUX UV DE MATÉRIAUX THERMOPLASTIQUES CHLORES ET CHARGES, PROCÉDÉ DE FABRICATION DESDITS MATÉRIAUX**
VERWENDUNG VON AMPHIPHILEN POLYMEREN ALS MITTEL ZUR ERHÖHUNG DER WÄRMESTABILITÄT UND UV-RESISTENZ VON CHLORIERTEN UND GEFÜLLTEN THERMOPLASTISCHEN MATERIALIEN SOWIE VERFAHREN ZUR HERSTELLUNG DIESER MATERIALIEN
USE OF AMPHIPHILIC POLYMERS AS AGENTS THAT IMPROVE THE THERMAL STABILITY AND THE UV RESISTANCE OF CHLORINATED AND FILLED THERMOPLASTIC MATERIALS, PROCESS FOR MANUFACTURING SAID MATERIALS

(30) Priorité: 07.12.2009 FR 0905901; 17.12.2009 US 287215 P
(43) Date de publication de la demande: 17.10.2012
(73) Titulaire: Coatex S.A.S, 69730 Genay (FR); Omya International AG, 4665 Oftringen (CH)
(72) Inventeur: MONGOIN, Jacques, F-69650 Quincieux (FR); SOUZY, Renaud, F-69300 Caluire et Cuire (FR); GANE, Patrick, A., C., CH-4852 Rothrist (CH); BURI, Matthias, CH-4852 Rothrist (CH)
(74) Mandataire: Richebourg, Michel François
(86) Numéro de dépôt international: PCT/IB2010/003116
(87) Numéro de publication internationale: WO 2011/070423

(56) Documents cités:
- WO-A1-2007/052122
- WO-A1-2008/107787
- WO-A2-2008/053296

## Description

La présente invention se rapporte au secteur des matériaux thermoplastiques chlorés contenant une charge minérale. Elle concerne un agent de compatibilité entre la charge et la résine, qui possède la double fonction d'améliorer la stabilité thermique et la résistance aux UV du matériau final.

Les matériaux thermoplastiques chlorés et notamment ceux à base de PVC ont de nombreuses applications comme la fabrication de tubes (adduction d'eau, assainissement, irrigation, gaines pour le passage des câbles) de matériaux de construction extérieurs et / ou intérieurs (profilés de fenêtres, volets, portes, bardages, faux plafonds) ou de pièces industrielles.

Ils contiennent une charge minérale telle que le talc, l'alumine, le dioxyde de titane, l'oxyde de magnésium, le sulfate de baryum, l'aluminium, la silice, le kaolin ou encore le carbonate de calcium naturel ou synthétique, charges qui sont indiquées dans le document JP 50-028105 décrivant des matériaux rigides obtenus à partir du mélange d'une ou plusieurs de ces charges avec du PVC.

Le carbonate de calcium est une charge privilégiée pour les matériaux thermoplastiques chlorés, puisqu'il permet d'améliorer certaines de leurs propriétés physiques, comme leur rigidité, le temps de refroidissement au cours de l'extrusion, ou encore le dépôt en sortie de filière ("die build-up"). Ceci est rapporté dans le document "The use of calcium carbonate to enhance the physical properties of rigid vinyl products" (Society of Plastic Engineering, Conf., 12-14 octobre 1999).

Selon les connaissances de base de l'homme du métier, la résine qui compose ces matériaux est un milieu hydrophobe dans lequel le carbonate de calcium se disperse mal : cela signifie que les grains de matière minérale ne se répartissent pas de manière naturelle et homogène dans ladite résine. Cette mauvaise répartition ou ce mauvais état de dispersion ou encore cette mauvaise compatibilité entraînent une dégradation des propriétés mécaniques et optiques de la composition finale.

Aussi, l'homme du métier a mis au point des méthodes de traitement du carbonate de calcium, en vue d'améliorer sa compatibilité avec des résines thermoplastiques en général, et des résines thermoplastiques chlorées telles que notamment le PVC. Les documents FR 1 047 087, WO 00 / 20336 et US 4 151 136 décrivent le traitement de surface du carbonate de calcium par des cires et des acides gras ayant de 8 à 22 atomes de carbone. L'acide stéarique et ses sels sont aujourd'hui communément mis en oeuvre : on en trouve des applications dans les documents WO 02 / 55596, WO 04 / 09711 et WO 01/32787.

Pour doper ou exacerber l'effet de la stéarine, l'homme du métier a ensuite développé des structures polymériques particulières, dites faiblement anioniques et de type peigne. A travers cette expression, on désigne un copolymère constitué d'un squelette essentiellement linéaire et de nature (méth)acrylique, sur lequel sont greffés au moins 2 segments latéraux constitués d'au moins un "macromonomère" du type oxyde de polyalkylène.

Les documents WO 2007 / 052122 et WO 2008 / 053296 démontrent l'influence bénéfique de tels polymères sur la résistance à l'impact et la brillance d'une composition de PVC chargée, propriétés dont on sait qu'elles constituent une preuve directe d'une meilleure compatibilité de la charge avec la résine. Ce lien a notamment été établi dans les publications "Study on ground-calcium carbonate and wollastonite composite fillers filling properties and reinforcement mechanisms" (Zhongguo Fenti Jishu, 2002, 8 (1), pp. 1-5), "Recycling of incompatible plastics with reactive compatibilizers" (Special Publication - Royal Society of Chemistry, 1997, 199 Chemical Aspects of Plastics Recycling, pp. 170-179) et "Labor-saving method of testing the dispersibility of titanium dioxide Pigments" (FATIPEC Congress (1988), Vol. III(19th), 307-19).

Parmi les structures peignes précédemment décrites, la Demanderesse a récemment identifié une famille de polymères particulièrement avantageuse puisque, outre leur aptitude à renforcer la compatibilité de la charge minérale avec la résine, ils améliorent la stabilité thermique de la composition finale, propriété fondamentale lorsqu'on sait que cette composition est destinée à subir des opérations de transformation par extrusion, injection, pressage, moulage tel que le moulage par injection, ou calandrage, à des températures élevées (plus de 150 °C). Les polymères en question sont caractérisés par la présence simultanée de 2 groupements oxyde d'éthylène et oxyde de propylène sur la chaîne latérale. Ceci constitue l'objet de la demande de brevet française non encore divulguée portant le numéro de dépôt FR 08 58748.

Mais ces dernières structures ne donnent pas encore totale satisfaction. En effet, on a observé un rosissement des compositions chargées lorsqu'elles sont soumises à des températures élevées ou aux rayons UV. Ce phénomène est générateur d'une couleur rose plus ou moins marquée à la surface de la composition, ce qui pose un problème d'esthétique pour l'utilisateur final.

Aussi, cherchant une solution technique en vue de maintenir une bonne compatibilité entre la charge minérale et la résine chlorée dans laquelle elle est introduite, tout en améliorant la stabilité thermique de ladite composition et sa résistance aux UV, la Demanderesse a mis au point l'utilisation de certains copolymères amphiphiles linéaires, présentant pour un poids moléculaire donné un certain indice de polymolécularité. Outre leur aptitude à rendre la charge compatible avec la résine dans laquelle elle est introduite, ces polymères disposent d'une fonction d'agent améliorant la stabilité thermique et la résistance aux UV de la composition finale ainsi chargée.

Les résultats obtenus avec de telles structures s'avèrent particulièrement intéressants :
- on maintient un bon état de dispersion de la charge dans la résine : cette propriété est directement reliée à une amélioration des propriétés optiques (brillance) et mécaniques (résistance à l'impact) de la composition chargée,
- on améliore la stabilité thermique de ladite composition chargée, telle que mesurée par DHC ou à travers des courbes de gélification,
- on améliore la résistance aux UV de ladite composition chargée, ce qui réduit le phénomène de rosissement, comme démontré à travers des mesures de blancheur après exposition à un rayonnement UV direct, ou après un traitement thermique,
et ce, par rapport à la même composition chargée :
- ne contenant pas d'agent compatibilisant autre que de l'acide stéarique,
- contenant outre l'acide stéarique un agent compatibilisant de type peigne, comme enseigné par l'art antérieur,
- contenant outre l'acide stéarique un agent compatibilisant de type amphiphile mais non linéaire et/ou qui ne présente pas les caractéristiques de poids moléculaire et d'indice de polymolécularité de la présente invention.

Aussi, un premier objet de l'invention consiste en l'utilisation, dans une composition thermoplastique chlorée et chargée contenant au moins une résine thermoplastique chlorée et au moins une charge minérale, comme agent améliorant la stabilité thermique et la résistance aux UV de ladite composition, d'un copolymère amphiphile linéaire caractérisé en ce que :
- il est constitué d'au moins un comonomère hydrophile et d'au moins un comonomère hydrophobe,
- il possède une masse molaire moyenne en poids comprise entre 5 000 g/mol et 20 000 g/mol et un indice de polymolécularité inférieur ou égal à 3, et préférentiellement une masse molaire moyenne en poids comprise entre 10 000 g/mol et 15 000 g/mol et un indice de polymolécularité inférieur ou égal à 2,5.

Par linéaire, la Demanderesse entend que le copolymère amphiphile est essentiellement linéaire, c'est-à-dire qu'elle peut comprendre une minorité de branchements aléatoires qui résulte d'une polymérisation radicalaire.

Cette utilisation est aussi caractérisée en ce que ledit copolymère amphiphile linéaire contient, en % en mole de chaque comonomère, entre 60 % et 95 % de comonomère hydrophile et de 5 % à 40 % de comonomère hydrophobe, préférentiellement entre 70 % et 90 % de comonomère hydrophile et de 10 % à 30 % de comonomère hydrophobe.

Cette utilisation est aussi caractérisée en ce que le comonomère hydrophile est choisi parmi l'acide acrylique, l'acide méthacrylique et les mélanges de ces comonomères.

Cette utilisation est aussi caractérisée en ce que le comonomère hydrophobe est choisi parmi les styrénés et les acrylates d'alkyle et leurs mélanges, dont plus particulièrement le styrène et l'acrylate de butyle respectivement.

Cette utilisation est aussi caractérisée en ce que ledit copolymère amphiphile linéaire possède une structure statistique ou une structure à blocs.

A ce titre, le copolymère utilisé selon l'invention est obtenu par copolymérisation de l'acide acrylique et/ou méthacrylique avec des comonomères hydrophobes tels que l'acrylate de butyle ou le styrène. Il a été synthétisé exclusivement dans l'eau par polymérisation radicalaire contrôlée mettant en oeuvre un agent de transfert de chaîne particulier qui est un sel de l'acide propanoïque du 2,2'-[carbonothioylbis(thio)]bis, et notamment son sel de sodium (N° CAS 864970-33-2). La formule générale de ce sel est la suivante :

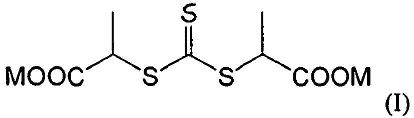

M désignant l'atome d'hydrogène, un sel d'amine, l'ammonium ou un cation alcalin, et plus préférentiellement le cation sodium.

Ce copolymère obtenu sous forme acide, peut être également partiellement ou totalement neutralisé par un ou plusieurs agents de neutralisation disposant d'un cation monovalent ou polyvalent, lesdits agents étant choisis préférentiellement parmi l'ammoniaque ou parmi les hydroxydes et / ou oxydes de calcium, de magnésium, ou parmi les hydroxydes de sodium, de potassium, de lithium, et de manière préférentielle en ce que l'agent de neutralisation est l'hydroxyde de sodium.

Ledit copolymère peut éventuellement, avant ou après neutralisation, être traité et séparé en plusieurs phases, selon des procédés statiques ou dynamiques connus de l'homme du métier, par un ou plusieurs solvants polaires appartenant notamment au groupe constitué par l'eau, le méthanol, l'éthanol, le propanol, l'isopropanol, les butanols, l'acétone, le tétrahydrofurane ou leurs mélanges. L'une des phases correspond alors au polymère utilisé selon l'invention.

Selon une autre variante, ledit copolymère peut aussi être séché.

Cette utilisation est aussi caractérisée en ce que la composition thermoplastique chlorée et chargée contient, par rapport à son poids total :
(a) de 0,1 à 99 % en poids sec d'au moins une résine thermoplastique chlorée,
(b) de 0,1 à 90 %, préférentiellement de 5 à 50 %, en poids sec d'au moins une charge minérale,
(c) de 0,01 à 5 %, préférentiellement de 0,1 à 3 % en poids sec dudit copolymère amphiphile linéaire,
(d) de 0 à 20 %, préférentiellement de 5 à 20 % en poids sec d'un stabilisant thermique et / ou d'un stabilisant UV et / ou d'un lubrifiant et / ou d'un modificateur de rhéologie et / ou d'un modificateur d'impact et / ou d'un agent de processabilité, qui n'est pas ledit copolymère amphiphile,
(e) de 0 à 3 %, préférentiellement de 0 à 1 %, très préférentiellement de 0 à 0,5 %, extrêmement préférentiellement de 0 à 0,2 % en poids sec par rapport au poids sec de la charge minérale, d'un autre agent de compatibilité que ledit copolymère amphiphile, cet agent de compatibilité étant préférentiellement un acide gras ayant de 8 à 20 atomes de carbone, ledit acide étant préférentiellement choisi parmi l'acide stéarique et ses sels.

Cette utilisation est aussi caractérisée en ce que la résine thermoplastique chlorée est choisie parmi le PVC, le polychlorure de vinyle surchloré (PVCC), le polyéthylène chloré, les copolymères du type PVC-polyacétate de vinyle (PVC-PVAC), et leurs mélanges.

Cette utilisation est aussi caractérisée en ce que la charge minérale est choisie parmi le carbonate de calcium naturel ou synthétique, les dolomies, le calcaire, le kaolin, le talc, et leurs mélanges, et est préférentiellement un carbonate de calcium naturel ou synthétique.

Cette utilisation est aussi caractérisée en ce que ledit copolymère amphiphile linéaire est mis en oeuvre lors d'une étape de broyage de ladite charge minérale, ledit broyage étant un broyage à sec ou un broyage en voie humide suivi d'un séchage, et préférentiellement est mis en oeuvre lors d'un broyage humide de ladite charge minérale, suivi d'un séchage.

Cette utilisation est aussi caractérisée en ce que ladite charge minérale a un diamètre moyen, mesuré par un Sedigraph™ 5100, compris entre 0,5 et 5 µm, et préférentiellement entre 0,6 µm et 1.5 µm.

Cette utilisation est aussi caractérisée en ce que ladite charge minérale a un pourcentage en poids de particules ayant un diamètre inférieur à 2 µm, mesuré par un Sedigraph™ 5100, compris entre 10 % et 99 %, préférentiellement entre 50 % et 95 %, et plus préférentiellement entre 60 % et 90 %.

Cette utilisation est aussi caractérisée en ce que ladite composition thermoplastique chlorée et chargée est formée par un procédé mettant en oeuvre au moins une étape de mélange à sec des composants (a) à (e).

Cette utilisation est aussi caractérisée en ce que ladite composition thermoplastique chlorée et chargée est formée par un procédé mettant en oeuvre au moins une étape de transformation par extrusion ou moulage par injection.

Cette utilisation est aussi en ce que ladite composition thermoplastique chlorée et chargée est formée par un procédé mettant en oeuvre au moins une étape a une température entre 150 et 250°C, et préférentiellement entre 180 à 220°C.

Un autre objet de l'invention consiste en un procédé de fabrication d'une composition thermoplastique chlorée et chargée contenant au moins une résine thermoplastique chlorée et au moins une charge minérale, comprenant :
a) au moins une étape de broyage de ladite charge minérale,
b) suivie d'au moins une étape d'incorporation dans la résine thermoplastique de la charge minérale broyée obtenue à l'étape a),
caractérisé en ce qu'il met en oeuvre, au cours de l'étape a), un copolymère amphiphile linéaire :
- constitué d'au moins un monomère hydrophile et d'au moins un monomère hydrophobe,
- et possédant une masse molaire moyenne en poids comprise entre 5 000 g/mol et 20 000 g/mol et un indice de polymolécularité inférieur ou égal à 3, et préférentiellement une masse molaire moyenne en poids comprise entre 10 000 g/mol et 15 000 g/mol et un indice de polymolécularité inférieur ou égal à 2,5.

Ce procédé est aussi caractérisé en ce que ledit copolymère amphiphile contient, en % en mole de chaque monomère, entre 60 % et 95 % de monomère hydrophile et de 5 % à 40 % de monomère hydrophobe, préférentiellement entre 70 % et 90 % de monomère hydrophile et de 10 % à 30 % de monomère hydrophobe.

Ce procédé est aussi caractérisé en ce que le comonomère hydrophile est choisi parmi l'acide acrylique, l'acide méthacrylique et les mélanges de ces monomères.

Ce procédé est aussi caractérisé en ce que le comonomère hydrophobe est choisi parmi les styrénés et les acrylates d'alkyle et leurs mélanges, dont plus particulièrement le styrène et l'acrylate de butyle respectivement.

Ce procédé est aussi caractérisé en ce que ledit copolymère amphiphile linéaire possède une structure statistique ou une structure à blocs.

Ce procédé est aussi caractérisé en ce que la composition thermoplastique chlorée et chargée contient, par rapport à son poids total :
(a) de 0,1 à 99 % en poids sec d'au moins une résine thermoplastique chlorée,
(b) de 0,1 à 90 %, préférentiellement de 5 à 50 %, en poids sec d'au moins une charge minérale,
(c) de 0,01 à 5 %, préférentiellement de 0,1 à 3 % en poids sec dudit copolymère amphiphile linéaire,
(d) de 0 à 20 %, préférentiellement de 5 à 20 % en poids sec d'un stabilisant thermique et / ou d'un stabilisant UV et / ou d'un lubrifiant et / ou d'un modificateur de rhéologie et / ou d'un modificateur d'impact et / ou d'un agent de processabilité, qui n'est pas ledit copolymère amphiphile,
(e) de 0 à 3 %, préférentiellement de 0 à 1 %, très préférentiellement de 0 à 0,5 %, extrêmement préférentiellement de 0 à 0,2 % en poids sec par rapport au poids sec de la charge minérale, d'un autre agent de compatibilité que ledit copolymère amphiphile, cet agent de compatibilité étant préférentiellement un acide gras ayant de 8 à 20 atomes de carbone, ledit acide étant préférentiellement choisi parmi l'acide stéarique et ses sels.

Ce procédé est aussi caractérisé en ce que la résine thermoplastique chlorée est choisie parmi le PVC, le polychlorure de vinyle surchloré (PVCC), le polyéthylène chloré, les copolymères du type PVC-polyacétate de vinyle (PVC-PVAC), et leurs mélanges.

Ce procédé est aussi caractérisé en ce que la charge minérale est choisie parmi le carbonate de calcium naturel ou synthétique, les dolomies, le calcaire, le kaolin, le talc, et leurs mélanges, et est préférentiellement un carbonate de calcium naturel ou synthétique.

Ce procédé est aussi caractérisé en ce que l'étape a) est une étape de broyage à sec ou un broyage en voie humide suivi d'un séchage, et préférentiellement d'un broyage humide de ladite charge minérale, suivi d'un séchage.

Ce procédé est aussi caractérisé en ce que ladite charge minérale a un diamètre moyen, mesuré par un Sedigraph™ 5100, compris entre 0,5 et 5 µm, et préférentiellement entre 0,6 µm et 1.5 µm.

Ce procédé est aussi caractérisé en ce que ladite charge minérale a un pourcentage en poids de particules ayant un diamètre inférieur à 2 µm, mesuré par un Sedigraph™ 5100, compris entre 10 % et 99 %, préférentiellement entre 50 % et 95 %, et plus préférentiellement entre 60 % et 90 %.

Ce procédé est aussi caractérisé en ce que l'étape b) est suivie par au moins une étape c) de transformation par extrusion ou moulage par injection.

Ce procédé est aussi caractérisé en ce que l'étape c) est réalisée à une température entre 150 et 250°C, et préférentiellement entre 180 à 220°C.

Un dernier objet de l'invention consiste en une composition thermoplastique chlorée et chargée, obtenue par le procédé selon l'invention.

La portée et l'intérêt de l'invention seront mieux perçus grâce aux exemples suivants qui ne sauraient être limitatifs.

### EXEMPLES

Dans tous les exemples, la masse molaire moyenne en poids, notée Mw, et l'indice de polymolécularité, noté Ip, sont déterminés :
- selon la méthode décrite dans le document WO 02 / 070571, pour les copolymères linéaires,
- et selon la méthode décrite dans le document WO 2008 / 107787, pour les copolymères de type peigne.

### EXEMPLE 1

Cet exemple illustre la fabrication de compositions à base de PVC et contenant du carbonate de calcium, pour lesquelles on a mesuré la résistance à l'impact, la brillance, la stabilité thermique et la résistance aux UV, dans différents cas de figure :
- en l'absence d'agent compatibilisant (essai n° 1),
- en présence d'un agent compatibilisant qui est un polymère de type peigne selon l'art antérieur (essais n° 2 et 3),
- en présence d'un copolymère amphiphile peigne (essais n° 4 à 7),
- en présence d'un copolymère amphiphile linéaire, qui ne présente pas les caractéristiques de poids moléculaire et d'indice de polymolécularité de l'invention (essai n° 8),
- en présence d'un copolymère amphiphile linéaire, qui présente les caractéristiques de poids moléculaire et d'indice de polymolécularité de l'invention (essais n° 9 à 13).

### Composition de PVC chargées :

- 2200 grammes d'une résine PVC commercialisée par la société ARKEMA™ sous le nom Lacovyl™ S110P
- 110 grammes de dioxyde de titane commercialisé par la société KRONOS™ sous le nom Kronos™ 2200
- 132 grammes d'un additif modificateur de choc organique de type coeur-écorce commercialisé par la société ARKEMA™ sous le nom Durastrength™ 320
- 55 grammes d'un stabilisant thermique commercialisé par la société BARLOCHER™ sous le nom One Pack Baeropan™
- 1,1 gramme d'un lubrifiant commercialisé par la société LAPASSE ADDITIVES CHEMICALS™ sous le nom Lacowax™ EP
- 352 grammes de carbonate de calcium sous forme de poudre, résultant du séchage d'Hydrocarb 90 OG commercialisé par la société OMYA™.

### Obtention des poudres sèches de carbonate de calcium

La suspension dénommée Hydrocarb 90 OG est une suspension de calcaire ayant un pourcentage en poids de particules ayant un diamètre inférieur à 2 µm, mesuré par un Sedigraph™ 5100, de 90 % et un diamètre moyen, mesuré par un Sedigraph™ 5100, de 0,7 µm.

Le produit Hydrocarb 90 OG a été séché au moyen d'une fontaine sécheur de type Niro Minor Mobile 2000 commercialisée par la société NIRO™. Les caractéristiques de ce séchage sont :
- température d'entrée du gaz : 350°C
- température de sortie du gaz : 102-105°C
- ventilation ouverte à 99%
- pression d'air : 4 bars

Le séchage est réalisé en présence de, exprimé par rapport au poids sec de carbonate de calcium :
- 0,90 % en poids sec d'acide stéarique,
- et, 0,45 % en poids sec d'acide stéarique lorsqu'il y a un agent compatibilisant selon l'art antérieur ou selon l'invention, 0,7 % en poids sec dudit agent étant alors engagé.

### Fabrication des mélanges secs de PVC

Pour chacun des essais, on commence par réaliser le mélange des différents constituants qui rentrent dans la composition des matériaux thermoplastiques chlorés. De tels mélanges sont réalisés selon les méthodes bien connues de l'homme du métier.

### Extrusion des mélanges secs de PVC

Tous les mélanges secs ont été extrudés avec un système Thermoelectron Polylab™ 600/610 P, équipé d'une bi-vis et d'une filière plate (25 mm x 3 mm).

Les profilés PVC sont ensuite calibrés à 15°C dans un bain d'eau et laminés sur un système Yvroud. Les paramètres d'extrusion sont :
- température des 4 zones : 170°C
- vitesse des vis : 30 tours par minute

### Mesures des résistances au choc

Les mesures de résistance au choc sont réalisées selon la norme British Standard BS 7413 : 2003. Les mesures ont été moyennées sur des lots de 10 éprouvettes fabriquées avec la machine Diadisc™ 4200 commercialisée par la société MUTRONIC™.

Ce paramètre sera noté « impact » et exprimé en kJ/m².

### Mesures de brillance

Les mesures de brillance ont été réalisées à 60° au moyen d'un spectrophotomètre Tri-Gloss commercialisé par la société BYK-GARDNER™.

Ce paramètre sera noté « brillance 60 », et est sans unité.

### Mesure de stabilité thermique

Le phénomène de stabilité thermique est appréhendé grâce à 2 méthodes différentes. La première repose sur la DHC, la seconde sur des courbes de gélification.

La mesure de DHC permet de déterminer la vitesse de déhydrochloration des échantillons de PVC à 200°C. Elle est représentative de la stabilité thermique de ces échantillons. Des échantillons de 0,5 g de PVC environ sont placés dans un appareil de type Metrohm 763 PVC Thermomat à 200°C. La quantité de vapeur de HCl relarguée par les échantillons est introduite dans une solution de 60 ml d'eau bipermutée dont on suit l'évolution de la conductivité. Le temps de stabilisation, noté « t_{DHC} »(min.), est le temps à partir duquel la conductivité de la solution aqueuse atteint une valeur de 50 µS/cm. Plus ce temps est élevé, meilleure est la stabilité des échantillons.

Les courbes de gélification sont réalisées sur les mélanges secs de PVC qui subissent un traitement thermique particulier. Ces mélanges secs de PVC sont introduits dans un mélangeur interne (Thermoelectron Rheomix 600/610P) avec les paramètres suivants :
- vitesse de 30 tour/min,
- température de 190°C
- volume de 69 cm³.

On trace une courbe du couple du mélangeur en fonction du temps. Cette courbe permet de visualiser l'évolution de la viscosité du mélange sec de PVC au cours du temps à une température de 190°C. En ce sens, et à la différence de la partie dénommée « extrusion des mélanges secs de PVC », le dispositif Thermoelectron est utilisé comme un mélangeur : il fait subir auxdits mélanges secs de PVC un certain traitement thermique, au cours duquel on suit l'évolution de la viscosité dudit mélange. Après une première période d'augmentation de la viscosité du mélange sec de PVC, suivie d'une forte décroissance qui correspond à la phase de gélification du PVC, on observe ensuite une phase de stabilisation du couple jusqu'à un temps de 10 minutes environ qui correspond à la phase normale d'extrusion de ce matériau. On observe ensuite, en fonction des caractéristiques de la charge traitée, une nouvelle évolution du couple du mélangeur interne qui correspond à la dégradation thermique du matériau PVC. Après 16 minutes, on peut discriminer de manière sensible les formulations PVC qui seront fortement dégradées de celles qui seront restées stables. On mesure alors la valeur du couple à cet instant, noté « couple » (N.m2). Plus cette valeur est faible, meilleure est la stabilité du mélange.

### Mesure de rosissement

Le phénomène de rosissement est appréhendé à travers la mesure du paramètre a (mesure du rouge, dans le repère bien connu de coordonnées L, a, b) sur les échantillons de PVC provenant directement de l'extrudeur et découpés en bandes de 20 x 0,9 cm (les paramètres d'extrusion ayant été indiqués plus haut).

Ce paramètre sera noté simplement « a ». Plus il est faible, plus le rosissement est atténué.

Il est également apprécié à travers la variation de a, après avoir exposé les échantillons de PVC provenant de l'extrudeur, découpés en bandes de 20 x 0,9 cm, à des lampes au mercure (200 - 450 nm), pendant 500 heures à 60 °C dans une enceinte Sepap 12/24.

Ce paramètre sera noté « Δ a uv ». Plus il est important, plus la couleur de l'échantillon se rapproche du rose.

Les polymères mis en oeuvre sont répertoriés dans les pages qui suivent, et les résultats applicatifs figurent dans le tableau 1.

### Essai n° 1

Cet essai constitue une référence et ne met pas en oeuvre d'agent compatibilisant.

### Essai n° 2

Cet essai illustre l'art antérieur et met en oeuvre un polymère peigne, constitué en poids de :
- 82,0 % d'acide acrylique,
- 18,0 % de méthacrylate de méthoxy polyéthylène glycol (Mw = 5 000 g/mole), avec Mw = 65 000 g/mole et Ip = 2,8.

### Essai n° 3

Cet essai illustre l'art antérieur et met en oeuvre un polymère peigne, constitué en poids de :
- 84,0 % d'acide méthacrylique,
- 16,0 % de méthacrylate d'hydroxy polyalkylène glycol (Mw = 3 000 g/mole), avec Mw = 65 000 g/mole et Ip = 2,8.

### Essai n° 4

Cet essai illustre l'invention et met en oeuvre un copolymère amphiphile bloc de l'acide acrylique/méthacrylate de méthoxy polyéthylène glycol (Mw = 2000 g/mol) avec un comonomère hydrophobe (l'acrylate de butyle), dans l'eau. Le copolymère amphiphile poly((AA-*co*-MAMPEG 2000)-*bloc*-ABu) est constitué en mole de :
- 55,1 % d'acide acrylique,
- 22,8 % de méthacrylate de méthoxy polyéthylène glycol (Mw = 2 000 g/mole),
- 22,1 % d'acrylate de butyle,
avec Mw = 33 800 g/mole et Ip = 3,93.

Dans un réacteur 2 L muni d'une agitation mécanique et d'un chauffage de type bain d'huile, sont introduits 600 g d'eau et 37.05 g de l'agent de transfert de formule (I) (M désignant le cation sodium) à 21.70 % dans l'eau.

Sous agitation, on chauffe ensuite le pied de cuve à une température égale à 65°C, et on introduit en parallèle sur 1 H les 3 solutions suivantes :
- 22,5 g d'acrylate de butyle,
- une solution aqueuse constituée de 6,45 g de Na₂S₂O₈ et 75 g d'eau,
- une solution aqueuse constituée de 1,95 g de Na₂S₂O₅ et 75 g d'eau,

Toujours sous agitation, sont introduites ensuite en parallèle à 65°C sur 1H30, les 3 solutions suivantes :
- 31,5 g d'acide acrylique et 360 g méthacrylate de méthoxy polyéthylène glycol de Mw = 2 000 g/mole dilué dans 240 g d'eau,
- une solution aqueuse constituée de 3,75 g de Na₂S₂O₈ et 37.5 g d'eau,
- une solution aqueuse constituée de 1,05 g de Na₂S₂O₅ et 37.5 g d'eau.

Après un traitement avec une solution aqueuse d'eau oxygénée (0,92 g d'H₂O₂ à 35 % dans 15 g d'eau), la solution obtenue est ensuite neutralisée à 90°C avec la soude jusqu'à pH = 12. Un dernier post traitement au Na₂S₂O₈ est effectué. On obtient une solution stable dans l'eau contenant le copolymère bloc neutralisé sodium de l'acide acrylique et du méthacrylate de méthoxy polyéthylène glycol 2000 avec l'acrylate de butyle, un comonomère hydrophobe.

### Essai n° 5

Cet essai illustre l'invention et met en oeuvre un copolymère amphiphile bloc de l'acide acrylique/méthacrylate de méthoxy polyéthylène glycol (Mw = 2000 g/mol) avec un comonomère hydrophobe (le styrène), dans l'eau. Le copolymère amphiphile poly((AA-*co*-MAMPEG 2000)-*bloc*-Sty) est constitué en mole de :
- 55,1 % d'acide acrylique,
- 22,7 % de méthacrylate de méthoxy polyéthylène glycol (Mw = 2 000 g/mole),
- 22,2 % de styrène,
avec Mw = 23 100 g/mole et Ip = 3,32.

Dans un réacteur 2 L muni d'une agitation mécanique et d'un chauffage de type bain d'huile, sont introduits 600 g d'eau et 37,05 g de l'agent de transfert de formule (I) (M désignant le cation sodium) à 21,70 % dans l'eau.

Sous agitation, on chauffe ensuite le pied de cuve à une température égale à 65°C, et on introduit en parallèle sur 1H les 3 solutions suivantes :
- 18.30 g de styrène,
- une solution aqueuse constituée de 6,45 g de Na₂S₂O₈ et 75 g d'eau,
- une solution aqueuse constituée de 1,95 g de Na₂S₂O₅ et 75 g d'eau,

Toujours sous agitation, sont introduites ensuite en parallèle à 65°C sur 1H30, les 3 solutions suivantes :
- 31,5 g d'acide acrylique et 360 g méthacrylate de méthoxy polyéthylène glycol (Mw = 2 000 g/mole) dilués dans 240 g d'eau,
- une solution aqueuse constituée de 3,75 g de Na₂S₂O₈ et 37.5 g d'eau,
- une solution aqueuse constituée de 1,05 g de Na₂S₂O₅ et 37.5 g d'eau.

Après un traitement avec une solution aqueuse d'eau oxygénée (0.92 g d'H₂O₂ à 35 % dans 15 g d'eau), la solution obtenue est ensuite neutralisée à 90°C avec la soude jusqu'à pH = 12. Un dernier post traitement au Na₂S₂O₈ est effectué. On obtient une solution stable dans l'eau contenant le copolymère à bloc neutralisé sodium de l'acide acrylique et du méthacrylate de méthoxy polyéthylène glycol 2000 avec le styrène, un comonomère hydrophobe.

### Essai n° 6

Cet essai illustre l'invention et met en oeuvre un copolymère amphiphile bloc de l'acide acrylique/méthacrylate de méthoxy polyéthylène glycol (Mw = 5000 g/mol) avec un comonomère hydrophobe (le styrène), dans l'eau. Le copolymère amphiphile poly((AA-*co*-MAMPEG 5000)-*bloc*-Sty) est constitué en mole de :
- 55,2 % d'acide acrylique,
- 22,7 % de méthacrylate de méthoxy polyéthylène glycol (Mw = 5 000 g/mole),
- 22,1 % de styrène,
avec Mw = 29 400 g/mole et Ip = 2,63.

Dans un réacteur 2 L muni d'une agitation mécanique et d'un chauffage de type bain d'huile, sont introduits 600 g d'eau et 37,05 g de l'agent de transfert de formule (I) (M désignant le cation sodium) à 21,70 % dans l'eau.

Sous agitation, on chauffe ensuite le pied de cuve à une température égale à 65°C, et on introduit en parallèle sur 1H les 3 solutions suivantes :
- 18.24 g de styrène,
- une solution aqueuse constituée de 6,45 g de Na₂S₂O₈ et 75 g d'eau,
- une solution aqueuse constituée de 1,95 g de Na₂S₂O₅ et 75 g d'eau.

Toujours sous agitation, sont introduits ensuite en parallèle à 65°C sur 1H30, les 3 solutions suivantes :
- 31.5 g d'acide acrylique et 360 g méthacrylate de méthoxy polyéthylène glycol (Mw = 5 000 g/mole) dilués dans 240 g d'eau,
- une solution aqueuse constituée de 3,75 g de Na₂S₂O₈ et 37.5 g d'eau,
- une solution aqueuse constituée de 1,05 g de Na₂S₂O₅ et 37.5 g d'eau.

Après un traitement avec une solution aqueuse d'eau oxygénée (0,92 g d'H₂O₂ à 35 % dans 15 g d'eau), la solution obtenue est ensuite neutralisée à 90°C avec la soude jusqu'à pH = 12. Un dernier post traitement au Na₂S₂O₈ est effectué. On obtient une solution stable dans l'eau contenant le copolymère à bloc neutralisé sodium de l'acide acrylique et du méthacrylate de méthoxy polyéthylène glycol 5000 avec le styrène, un comonomère hydrophobe.

### Essai n° 7

Cet essai illustre l'invention et met en oeuvre un copolymère amphiphile bloc de l'acide acrylique/méthacrylate de méthoxy polyéthylène glycol (Mw = 5000 g/mol) avec un comonomère hydrophobe (l'acrylate de butyle), dans l'eau. Le copolymère amphiphile poly((AA-*co*-MAMPEG 5000)-*bloc*-ABu) est constitué en mole de :
- 55,2 % d'acide acrylique,
- 22,7 % de méthacrylate de méthoxy polyéthylène glycol (Mw = 5 000 g/mole),
- 22,1 % d'acrylate de butyle,
avec Mw = 51 800 g/mole et Ip = 3,39.

Dans un réacteur 2 L muni d'une agitation mécanique et d'un chauffage de type bain d'huile, sont introduits 600 g d'eau et 37,05 g de l'agent de transfert de formule (I) (M désignant le cation sodium) à 21,70 % dans l'eau.

Sous agitation, on chauffe ensuite le pied de cuve à une température égale à 65°C, et on introduit en parallèle sur 1H les 3 solutions suivantes :
- 22.50 g d'acrylate de butyle,
- une solution aqueuse constituée de 6,45 g de Na₂S₂O₈ et 75 g d'eau,
- une solution aqueuse constituée de 1,95 g de Na₂S₂O₅ et 75 g d'eau.

Toujours sous agitation, sont introduits ensuite en parallèle à 65°C sur 1H30, les 3 solutions suivantes :
- 31,5 g d'acide acrylique et 360 g méthacrylate de méthoxy polyéthylène glycol (Mw = 5 000 g/mole) dilués dans 240 g d'eau
- une solution aqueuse constituée de 3,75 g de Na₂S₂O₈ et 37,5 g d'eau,
- une solution aqueuse constituée de 1.05 g de Na₂S₂O₅ et 37.5 g d'eau.

Après un traitement avec une solution aqueuse d'eau oxygénée (0,92 g d'H₂O₂ à 35 % dans 15 g d'eau), la solution obtenue est ensuite neutralisée à 90°C avec la soude jusqu'à pH = 12. Un dernier post traitement au Na₂S₂O₈ est effectué. On obtient une solution stable dans l'eau contenant le copolymère à bloc neutralisé sodium de l'acide acrylique et du méthacrylate de méthoxy polyéthylène glycol 5000 avec l'acrylate de butyle, un comonomère hydrophobe.

### Essai n° 8

Cet essai est hors invention et met en oeuvre un copolymère amphiphile statistique de l'acide acrylique avec des comonomères hydrophobes (l'acrylate de butyle), dans l'eau. Le copolymère amphiphile poly(AA-co-Abu) est constitué en mole de :
- 90,0 % d'acide acrylique,
- 10,0 % d'acrylate de butyle,
avec Mw =12 000 g/mole et Ip = 3.4.

Dans un réacteur 2 L muni d'une agitation mécanique et d'un chauffage de type bain d'huile, sont introduits 219,6 g d'eau et 293,43 g d'isopropanol et 1.4 g de l'AZDN. Sous agitation, on chauffe ensuite le pied de cuve à reflux, et on introduit sur 2H00 226.,96 g d'acide acrylique, 44,84 g d'acrylate de butyle et 175,2 g d'eau.

Le milieu est ensuite distillé (élimination de l'isopropanol) et neutralisé avec la soude jusqu'à pH = 12,8. On obtient une solution stable dans l'eau contenant le copolymère statistique « conventionnel » neutralisé sodium de l'acide acrylique avec l'acrylate de butyle, un comonomère hydrophobe.

### Essai n° 9

Cet essai illustre l'invention et met en oeuvre un copolymère amphiphile bloc de l'acide acrylique avec un comonomère hydrophobe (le styrène), dans l'eau. Le copolymère amphiphile poly(AA-*bloc*-Sty) est constitué en mole de :
- 90,0 % d'acide acrylique,
- 10 % de styrène,
avec Mw = 9 600 g/mole et Ip = 2,0.

Dans un réacteur 2 L muni d'une agitation mécanique et d'un chauffage de type bain d'huile, sont introduits 600 g d'eau et 83.1 g de l'agent de transfert de formule (I) (M désignant le cation sodium) à 21.70 % dans l'eau.

Sous agitation, on chauffe ensuite le pied de cuve à une température égale à 65°C, et on introduit en parallèle sur 1H les 3 solutions suivantes :
- 17,25 g de styrène,
- une solution aqueuse constituée de 12,90 g de Na₂S₂O₈ et 150 g d'eau,
- une solution aqueuse constituée de 3.,90 g de Na₂S₂O₅ et 150 g d'eau.

Toujours sous agitation, sont introduits ensuite en parallèle à 65°C sur 1H30, les 3 solutions suivantes :
- 105 g d'acide acrylique dilué dans 75 g d'eau,
- une solution aqueuse constituée de 1,5 g de Na₂S₂O₈ et 75 g d'eau,
- une solution aqueuse constituée de 0,42 g de Na₂S₂O₅ et 75 g d'eau.

Après un traitement avec une solution aqueuse d'eau oxygénée (1,83 g d'H₂O₂ à 35 % dans 15 g d'eau), la solution obtenue est ensuite neutralisée à 90°C avec la soude jusqu'à pH = 12. Un dernier post traitement au Na₂S₂O₈ est effectué. On obtient une solution stable dans l'eau contenant le copolymère à bloc neutralisé sodium de l'acide acrylique avec le styrène, un comonomère hydrophobe.

### Essai n° 10

Cet essai illustre l'invention et met en oeuvre un copolymère amphiphile bloc de l'acide acrylique avec un comonomère hydrophobe (l'acrylate de butyle), dans l'eau. Le copolymère amphiphile poly(AA-*bloc*-ABu) est constitué en mole de :
- 90,0 % d'acide acrylique,
- 10,0 % d'acrylate de butyle,
avec Mw = 14 800 g/mole et Ip = 2,5.

Dans un réacteur 2 L muni d'une agitation mécanique et d'un chauffage de type bain d'huile, sont introduits 800 g d'eau et 110.8 g de l'agent de transfert de formule (I) (M désignant le cation sodium) à 19,35 % dans l'eau.

Sous agitation, on chauffe ensuite le pied de cuve à une température égale à 65°C, et on introduit en parallèle sur 1H les 3 solutions suivantes :
- 30 g d'acrylate de butyle,
- une solution aqueuse constituée de 17,2 g de Na₂S₂O₈ et 100 g d'eau,
- une solution aqueuse constituée de 5,2 g de Na₂S₂O₅ et 100 g d'eau.

Toujours sous agitation, sont introduits ensuite en parallèle à 65°C sur 1H30, les 3 solutions suivantes :
- 140 g d'acide acrylique dilué dans 100 g d'eau
- une solution aqueuse constituée de 2 g de Na₂S₂O₈ et 50 g d'eau
- une solution aqueuse constituée de 0,56 g de Na₂S₂O₅ et 50 g d'eau

Après un traitement avec une solution aqueuse d'eau oxygénée (1,2 g d'H₂O₂ à 35 % dans 20 g d'eau), la solution obtenue est ensuite neutralisée à 90°C avec la soude jusqu'à pH = 12. Un dernier post traitement au Na₂S₂O₈ est effectué. On obtient une solution stable dans l'eau contenant le copolymère à bloc neutralisé sodium de l'acide acrylique avec l'acrylate de butyle, un comonomère hydrophobe.

### Essai n° 11

Cet essai illustre l'invention et met en oeuvre un copolymère amphiphile bloc de l'acide acrylique avec un comonomère hydrophobe (l'acrylate de butyle), dans l'eau. Le copolymère amphiphile poly(AA-*bloc*-ABu) est constitué en mole de :
- 80,0 % d'acide acrylique,
- 20,0 % d'acrylate de butyle,
avec Mw = 8 600 g/mole et Ip = 2,3.

Dans un réacteur 2 L muni d'une agitation mécanique et d'un chauffage de type bain d'huile, sont introduits 800 g d'eau et 368.81 g de l'agent de transfert de formule (I) (M désignant le cation sodium) à 21.70 % dans l'eau.

Sous agitation, on chauffe ensuite le pied de cuve à une température égale à 65°C, et on introduit en parallèle sur 1H les 3 solutions suivantes :
- 56.6 g d'acrylate de butyle,
- une solution aqueuse constituée de 51,6 g de Na₂S₂O₈ et 150 g d'eau,
- une solution aqueuse constituée de 15,6 g de Na₂S₂O₅ et 100 g d'eau.

Toujours sous agitation, sont introduits ensuite en parallèle à 65°C sur 1H30, les 3 solutions suivantes :
- 125,3 g d'acide acrylique dilué dans 114 g d'eau,
- une solution aqueuse constituée de 6 g de Na₂S₂O₈ et 50 g d'eau,
- une solution aqueuse constituée de 1,68 g de Na₂S₂O₅ et 50 g d'eau.

Après un traitement avec une solution aqueuse d'eau oxygénée (3.6 g d'H₂O₂ à 35 % dans 20 g d'eau), la solution obtenue est ensuite neutralisée à 90°C avec la soude jusqu'à pH = 12. Un dernier post traitement au Na₂S₂O₈ est effectué. On obtient une solution stable dans l'eau contenant le copolymère à bloc neutralisé sodium de l'acide acrylique avec l'acrylate de butyle, un comonomère hydrophobe.

### Essai n° 12

Cet essai illustre l'invention et met en oeuvre un copolymère amphiphile bloc de l'acide acrylique avec des comonomères hydrophobes (l'acrylate de butyle et méthacrylate de stéaryle), dans l'eau. Le copolymère amphiphile poly(AA-bloc-(Abu-co-Méth de stéaryle)) est constitué en mole de :
- 80,0 % d'acide acrylique,
- 10 % d'acrylate de butyle,
- 10 % de méthacrylate de stéaryle,
avec Mw = 12 600 g/mole et Ip = 2,3.

Dans un réacteur 2 L muni d'une agitation mécanique et d'un chauffage de type bain d'huile, sont introduits 800 g d'eau et 123,22 g de l'agent de transfert de formule (I) (M désignant le cation sodium) à 21.70 % dans l'eau.

Sous agitation, on chauffe ensuite le pied de cuve à une température égale à 65°C, et on introduit en parallèle sur 1 H les 3 solutions suivantes :
- 28 g d'acrylate de butyle et 74,86 g de méthacrylate de stéaryle,
- une solution aqueuse constituée de 17,2 g de Na₂S₂O₈ et 100 g d'eau,
- une solution aqueuse constituée de 5,2 g de Na₂S₂O₅ et 100 g d'eau.

Toujours sous agitation, sont introduits ensuite en parallèle à 65°C sur 1H30, les 3 solutions suivantes :
- 125,3 g d'acide acrylique dilué dans 114 g d'eau
- une solution aqueuse constituée de 2 g de Na₂S₂O₈ et 50 g d'eau
- une solution aqueuse constituée de 0,56 g de Na₂S₂O₅ et 50 g d'eau

Après un traitement avec une solution aqueuse d'eau oxygénée (1.2 g d'H₂O₂ à 35 % dans 20 g d'eau), la solution obtenue est ensuite neutralisée à 90°C avec la soude jusqu'à pH = 12. Un dernier post traitement au Na₂S₂O₈ est effectué. On obtient une solution stable dans l'eau contenant le copolymère à bloc neutralisé sodium de l'acide acrylique avec l'acrylate de butyle et le méthacrylate de stéaryle, des comonomères hydrophobes.

### Essai n° 13

Cet essai illustre l'invention et met en oeuvre la synthèse d'un copolymère amphiphile à structure statistique et à Ip contrôlée de l'acide acrylique avec un comonomère hydrophobe (l'acrylate de butyle), dans l'eau. Le copolymère amphiphile poly(AA-co-Abu) est constitué en mole de :
- 90,0 % d'acide acrylique,
- 10 % d'acrylate de butyle,
avec Mw = 12 700 g/mole et Ip = 2,5.

Dans un réacteur 2 L muni d'une agitation mécanique et d'un chauffage de type bain d'huile, sont introduits 500 g d'eau et 57,75 g de l'agent de transfert de formule (I) (M désignant le cation sodium) à 21.70 % dans l'eau.

Sous agitation, on chauffe ensuite le pied de cuve à une température égale à 90°C, et on introduit en parallèle sur 1 H30 les 3 solutions suivantes :
- 315,9 g d'acide acrylique, 62,4 g d'acrylate de butyle et 72,1 g d'eau,
- une solution aqueuse constituée de 31.32 g de Na₂S₂O₈ et 100 g d'eau,
- une solution aqueuse constituée de 8.93 g de Na₂S₂O₅ et 100 g d'eau.

Après un traitement avec une solution aqueuse d'eau oxygénée (1.2 g d'H₂O₂ à 35 % dans 20 g d'eau), la solution obtenue est ensuite neutralisée à 90°C avec la soude jusqu'à pH = 12. Un dernier post traitement au Na₂S₂O₈ est effectué. On obtient une solution stable dans l'eau contenant le copolymère à Ip contrôlé neutralisé sodium de l'acide acrylique avec l'acrylate de butyle, un comonomère hydrophobe.

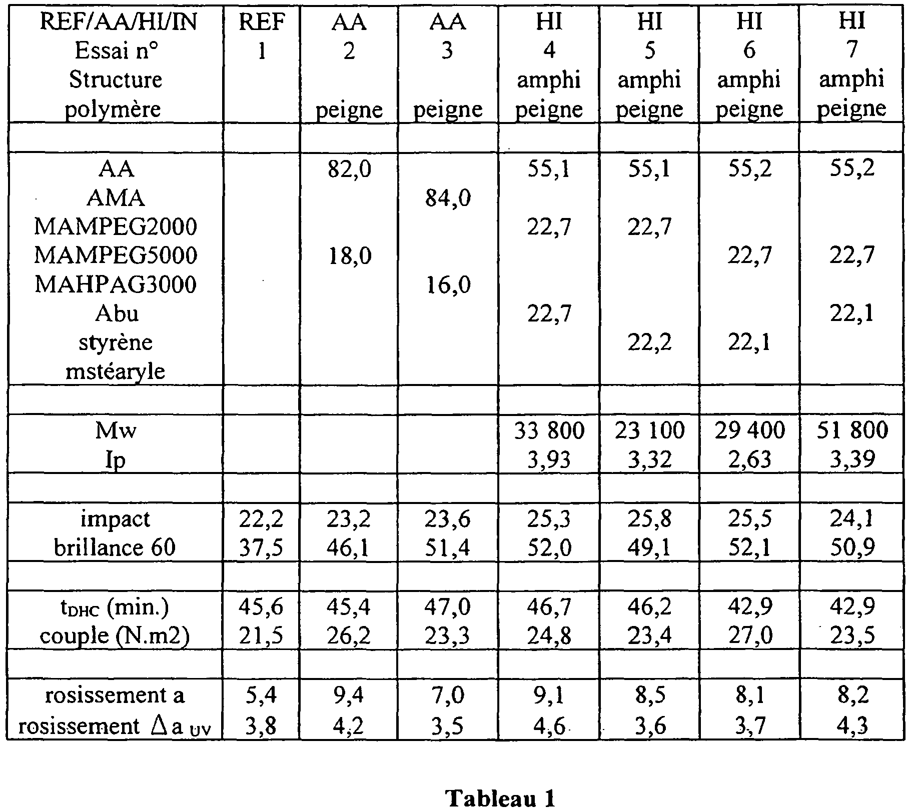

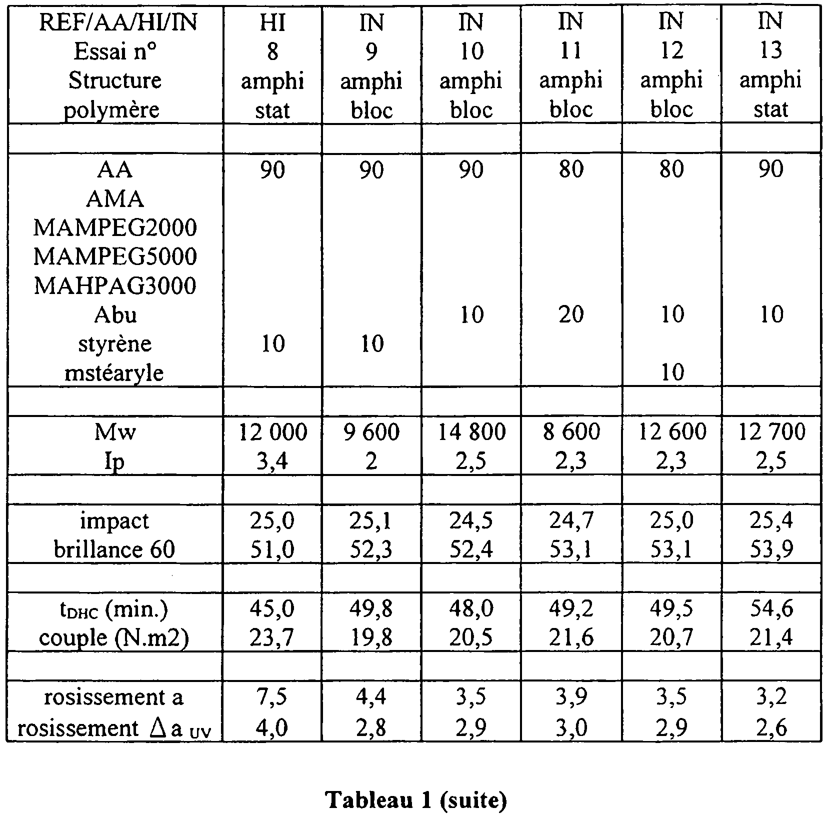

Dans le tableau 1, on indique que les abréviations suivantes désignent (les autres étant évidentes ou déjà explicitées par ailleurs) :
REF : référence
   AA : Art Antérieur
   HI : Hors Invention
   IN : Invention
MAMPEG2000 : méthacrylate de méthoxy polyéthylène glycol (Mw = 2000 g/mole)
   MAMPEG5000 : méthacrylate de méthoxy polyéthylène glycol (Mw = 5000 g/mole)
   MAHPAG3000 : méthacrylate d'hydroxy polyalkylène glycol (Mw = 3000 g/mole)

En tout premier lieu, la lecture de ce tableau démontre l'influence positive de l'agent compatibilisant (quel qu'il soit) sur la résistance à l'impact et la brillance des échantillons. Cet agent joue son rôle de compatibilisant entre la charge et la résine, améliorant la dispersion de la première au sein de la seconde : les propriétés mécaniques de résistance à l'impact et de brillance s'en trouvent améliorées, comme attendu.

Au niveau de la stabilité thermique des échantillons, on constate que le polymère peigne non amphiphile selon l'essai n° 3 -qui appartient à l'art antérieur- est plus performant que son homologue selon l'essai n° 2, ce qui était attendu : c'est précisément pour cette fonction de stabilisant thermique que le polymère selon l'essai n° 3 a été revendiqué dans la demande de brevet française non encore publiée portant le numéro FR 08 58748). De plus, on constate que ce polymère peigne non amphiphile conduit à une stabilité thermique améliorée, par rapport aux valeurs obtenues avec les copolymères peigne amphiphiles hors de l'invention. Ce sont véritablement les copolymères linéaires amphiphiles selon l'invention qui conduisent aux meilleurs résultats : une stabilité thermique largement améliorée, aussi bien du point de vue de la DHC que des courbes de gélification.

Enfin, en ce qui concerne le rosissement, ce sont sans conteste les copolymères selon l'invention qui conduisent aux meilleurs résultats. En résumé, ces polymères n'altèrent pas la compatibilité de la charge minérale avec la résine (maintien des propriétés de résistance à l'impact et de brillance), mais ils améliorent significativement la stabilité thermique des matériaux chargés tout en réduisant leur tendance au rosissement.

## Revendications

1. Utilisation, dans une composition thermoplastique chlorée et chargée contenant au moins une résine thermoplastique chlorée et au moins une charge minérale, comme agent améliorant la stabilité thermique et la résistance aux UV de ladite composition, d'un copolymère amphiphile linéaire **caractérisé en ce que** :
- il est constitué d'au moins un monomère hydrophile et d'au moins un monomère hydrophobe,
- il possède une masse molaire moyenne en poids comprise entre 5 000 g/mol et 20 000 g/mol et un indice de polymolécularité inférieur ou égal à 3, et préférentiellement une masse molaire moyenne en poids comprise entre 10 000 g/mol et 15 000 g/mol et un indice de polymolécularité inférieur ou égal à 2,5.

2. Utilisation, selon la revendication 1, **caractérisée en ce que** ledit copolymère amphiphile contient, en % en mole de chaque monomère, entre 60 % et 95 % de monomère hydrophile et de 5 % à 40 % de monomère hydrophobe, préférentiellement entre 70 % et 90 % de monomère hydrophile et de 10 % à 30 % de monomère hydrophobe.

3. Utilisation, selon l'une des revendications 1 ou 2, **caractérisée en ce que** le comonomère hydrophile est choisi parmi l'acide acrylique, l'acide méthacrylique et les mélanges de ces monomères.

4. Utilisation, selon l'une des revendications 1 à 3, **caractérisée en ce que** le comonomère hydrophobe est choisi parmi les styrénés et les acrylates d'alkyle et leurs mélanges, dont plus particulièrement le styrène et l'acrylate de butyle respectivement.

5. Utilisation, selon l'une des revendications 1 à 4, **caractérisée en ce que** ledit copolymère amphiphile linéaire possède une structure statistique ou une structure à blocs.

6. Utilisation, selon l'une des revendications 1 à 5, **caractérisée en ce que** la composition thermoplastique chlorée et chargée contient, par rapport à son poids total :
(a) de 0,1 à 99 % en poids sec d'au moins une résine thermoplastique chlorée,
(b) de 0,1 à 90 %, préférentiellement de 5 à 50 %, en poids sec d'au moins une charge minérale,
(c) de 0,01 à 5 %, préférentiellement de 0,1 à 3 % en poids sec dudit copolymère amphiphile linéaire,
(d) de 0 à 20 %, préférentiellement de 5 à 20 % en poids sec d'un stabilisant thermique et / ou d'un stabilisant UV et / ou d'un lubrifiant et / ou d'un modificateur de rhéologie et / ou d'un modificateur d'impact et / ou d'un agent de processabilité, qui n'est pas ledit copolymère amphiphile,
(e) de 0 à 3 %, préférentiellement de 0 à 1 %, très préférentiellement de 0 à 0,5 %, extrêmement préférentiellement de 0 à 0,2 % en poids sec par rapport au poids sec de la charge minérale, d'un autre agent de compatibilité que ledit copolymère amphiphile, cet agent de compatibilité étant préférentiellement un acide gras ayant de 8 à 20 atomes de carbone, ledit acide étant préférentiellement choisi parmi l'acide stéarique et ses sels.

7. Utilisation, selon l'une des revendications 1 à 6, **caractérisée en ce que** la résine thermoplastique chlorée est choisie parmi le PVC, le polychlorure de vinyle surchloré (PVCC), le polyéthylène chloré, les copolymères du type PVC-polyacétate de vinyle (PVC-PVAC), et leurs mélanges.

8. Utilisation, selon l'une des revendications 1 à 7, **caractérisée en ce que** la charge minérale est choisie parmi le carbonate de calcium naturel ou synthétique, les dolomies, le calcaire, le kaolin, le talc, et leurs mélanges, et est préférentiellement un carbonate de calcium naturel ou synthétique.

9. Utilisation, selon l'une des revendications 1 à 8, **caractérisée en ce que** ledit copolymère amphiphile linéaire est mis en oeuvre lors d'une étape de broyage de ladite charge minérale, ledit broyage étant un broyage à sec ou un broyage en voie humide suivi d'un séchage, et préférentiellement est mis en oeuvre lors d'un broyage humide de ladite charge minérale, suivi d'un séchage.

10. Utilisation, selon l'une des revendications 1 à 9, **caractérisée en ce que** ladite charge minérale a un diamètre moyen, mesuré par un Sedigraph™ 5100, compris entre 0,5 et 5 µm, et préférentiellement entre 0,6 µm et 1.5 µm.

11. Utilisation, selon l'une des revendications 1 à 10, **caractérisée en ce que** ladite charge minérale a un pourcentage en poids de particules ayant un diamètre inférieur à 2 µm, mesuré par un Sedigraph™ 5100, compris entre 10 % et 99 %, préférentiellement entre 50 % et 95 %, et plus préférentiellement entre 60 % et 90 %.

12. Utilisation, selon la revendication 6, **caractérisée en ce que** ladite composition thermoplastique chlorée et chargée est formée par un procédé mettant en oeuvre au moins une étape de mélange à sec des composants (a) à (e).

13. Utilisation, selon l'une des revendications 1 à 12, **caractérisée en ce que** ladite composition thermoplastique chlorée et chargée est formée par un procédé mettant en oeuvre au moins une étape de transformation par extrusion ou moulage par injection.

14. Utilisation, selon l'une des revendications 1 à 13, **caractérisée en ce que** ladite composition thermoplastique chlorée et chargée est formée par un procédé mettant en oeuvre au moins une étape à une température entre 150 et 250°C, et préférentiellement entre 180 à 220°C.

15. Procédé de fabrication d'une composition thermoplastique chlorée et chargée contenant au moins une résine thermoplastique chlorée et au moins une charge minérale, comprenant :
a) au moins une étape de broyage de ladite charge minérale,
b) suivie d'au moins une étape d'incorporation dans la résine thermoplastique de la charge minérale broyée obtenue à l'étape a),
**caractérisé en ce qu'**il met en oeuvre, au cours de l'étape a), un copolymère amphiphile linéaire :
- constitué d'au moins un monomère hydrophile et d'au moins un monomère hydrophobe,
- et possédant une masse molaire moyenne en poids comprise entre 5 000 g/mol et 20 000 g/mol et un indice de polymolécularité inférieur ou égal à 3, et préférentiellement une masse molaire moyenne en poids comprise entre 10 000 g/mol et 15 000 g/mol et un indice de polymolécularité inférieur ou égal à 2,5.

16. Procédé, selon la revendication 15, **caractérisé en ce que** ledit copolymère amphiphile contient, en % en mole de chaque monomère, entre 60 % et 95 % de monomère hydrophile et de 5 % à 40 % de monomère hydrophobe, préférentiellement entre 70 % et 90 % de monomère hydrophile et de 10 % à 30 % de monomère hydrophobe.

17. Procédé, selon l'une des revendications 15 ou 16, **caractérisé en ce que** le comonomère hydrophile est choisi parmi l'acide acrylique, l'acide méthacrylique et les mélanges de ces monomères.

18. Procédé, selon l'une des revendications 15 à 17, **caractérisé en ce que** le comonomère hydrophobe est choisi parmi les styrénés et les acrylates d'alkyle et leurs mélanges, dont plus particulièrement le styrène et l'acrylate de butyle respectivement.

19. Procédé, selon l'une des revendications 15 à 18, **caractérisé en ce que** ledit copolymère amphiphile linéaire possède une structure statistique ou une structure à blocs.

20. Procédé, selon l'une des revendications 15 à 19, **caractérisé en ce que** la composition thermoplastique chlorée et chargée contient, par rapport à son poids total :
(a) de 0,1 à 99 % en poids sec d'au moins une résine thermoplastique chlorée,
(b) de 0,1 à 90 %, préférentiellement de 5 à 50 %, en poids sec d'au moins une charge minérale,
(c) de 0,01 à 5 %, préférentiellement de 0,1 à 3 % en poids sec dudit copolymère amphiphile linéaire,
(d) de 0 à 20 %, préférentiellement de 5 à 20 % en poids sec d'un stabilisant thermique et / ou d'un stabilisant UV et / ou d'un lubrifiant et / ou d'un modificateur de rhéologie et / ou d'un modificateur d'impact et / ou d'un agent de processabilité, qui n'est pas ledit copolymère amphiphile,
(e) de 0 à 3 %, préférentiellement de 0 à 1 %, très préférentiellement de 0 à 0,5 %, extrêmement préférentiellement de 0 à 0,2 % en poids sec par rapport au poids sec de la charge minérale, d'un autre agent de compatibilité que ledit copolymère amphiphile, cet agent de compatibilité étant préférentiellement un acide gras ayant de 8 à 20 atomes de carbone, ledit acide étant préférentiellement choisi parmi l'acide stéarique et ses sels.

21. Procédé, selon l'une des revendications 15 à 20, **caractérisé en ce que** la résine thermoplastique chlorée est choisie parmi le PVC, le polychlorure de vinyle surchloré (PVCC), le polyéthylène chloré, les copolymères du type PVC-polyacétate de vinyle (PVC-PVAC), et leurs mélanges.

22. Procédé, selon l'une des revendications 15 à 21, **caractérisé en ce que** la charge minérale est choisie parmi le carbonate de calcium naturel ou synthétique, les dolomies, le calcaire, le kaolin, le talc, et leurs mélanges, et est préférentiellement un carbonate de calcium naturel ou synthétique.

23. Procédé, selon l'une des revendications 15 à 22, **caractérisé en ce que** l'étape a) est une étape de broyage à sec ou un broyage en voie humide suivi d'un séchage, et préférentiellement d'un broyage humide de ladite charge minérale, suivi d'un séchage.

24. Procédé, selon l'une des revendications 15 à 23, **caractérisé en ce que** ladite charge minérale a un diamètre moyen, mesuré par un Sedigraph™ 5100, compris entre 0,5 et 5 µm, et préférentiellement entre 0,6 µm et 1.5 µm.

25. Procédé, selon l'une des revendications 15 à 24, **caractérisé en ce que** ladite charge minérale a un pourcentage en poids de particules ayant un diamètre inférieur à 2 µm, mesuré par un Sedigraph™ 5100, compris entre 10 % et 99 %, préférentiellement entre 50 % et 95 %, et plus préférentiellement entre 60 % et 90 %.

26. Procédé, selon l'une des revendications 15 à 25, **caractérisé en ce que** l'étape b) est suivie par au moins une étape c) de transformation par extrusion ou moulage par injection.

27. Procédé, selon la revendication 26, **caractérisé en ce que** l'étape c) est réalisée a une température entre 150 et 250°C, et préférentiellement entre 180 à 220°C.

28. Composition thermoplastique chlorée et chargée, obtenue par le procédé selon l'une des revendications 15 à 27.

## Patentansprüche

1. Verwendung eines linearen, amphiphilen Copolymers in einer chlorierten und gefüllten thermoplastischen Zusammensetzung, die wenigstens ein chloriertes thermoplastisches Harz und wenigstens einen Mineralfüllstoff enthält, als ein Mittel zur Verbesserung der thermischen Stabilität und UV-Beständigkeit der Zusammensetzung, **dadurch gekennzeichnet, dass**:
- es aus wenigstens einem hydrophilen Monomer und wenigstens einem hydrophoben Monomer besteht,
- es eine gewichtsgemittelte molare Masse von zwischen 5 000 g/mol und 20 000 g/mol und einen Polymolekularitätsindex von kleiner oder gleich 3 aufweist, und bevorzugt eine gewichtsgemittelte molare Masse von zwischen 10 000 g/mol und 15 000 g/mol und einen Polymolekularitätsindex von kleiner oder gleich 2,5.

2. Verwendung nach Anspruch 1, **dadurch gekennzeichnet, dass** das amphiphile Copolymer enthält, in Mol% pro Monomer, zwischen 60 % und 95 % eines hydrophilen Monomers und von 5 % bis 40 % eines hydrophoben Monomers, bevorzugt zwischen 70 % und 90 % eines hydrophilen Monomers und von 10 % bis 30 % eines hydrophoben Monomers.

3. Verwendung nach Anspruch 1 oder 2, **dadurch gekennzeichnet, dass** das hydrophile Co-Monomer ausgewählt ist aus Acrylsäure, Methacrylsäure sowie den Mischungen dieser Monomere.

4. Verwendung nach einem der Ansprüche 1 bis 3, **dadurch gekennzeichnet, dass** das hydrophobe Co-Monomer ausgewählt ist aus den Styrolen und den Alkylacrylaten sowie den Mischungen davon, einschliesslich insbesondere Butylstyrol und Butylacrylat.

5. Verwendung nach einem der Ansprüche 1 bis 4, **dadurch gekennzeichnet, dass** das lineare, amphiphile Copolymer eine statistische Struktur oder eine Blockstruktur aufweist.

6. Verwendung nach einem der Ansprüche 1 bis 5, **dadurch gekennzeichnet, dass** die chlorierte und gefüllte thermoplastische Zusammensetzung enthält, bezogen auf ihr Gesamtgewicht:
(a) von 0,1 bis 99 Trockengewichtsprozent wenigstens eines chlorierten thermoplastischen Harzes,
(b) von 0,1 bis 90 Trockengewichtsprozent, bevorzugt von 5 bis 50 Trockengewichtsprozent wenigstens eines Mineralfüllstoffes,
(c) von 0,01 bis 5 Trockengewichtsprozent, bevorzugt von 0,1 bis 3 Trockengewichtsprozent des linearen, amphiphilen Copolymers,
(d) von 0 bis 20 Trockengewichtsprozent, bevorzugt von 5 bis 20 Trockengewichtsprozent eines Wärmestabilisators und/oder eines UV-Stabilisators und/oder eines Schmiermittels und/oder eines Rheologiemodifizierungsmittels und/oder eines Schlagzähigkeitsverbesserers und/oder eines Verarbeitbarkeitsmittels, der bzw. das nicht das amphiphile Copolymer ist,
(e) von 0 bis 3 Trockengewichtsprozent, bevorzugt von 0 bis 1 Trockengewichtsprozent, sehr bevorzugt von 0 bis 0,5 Trockengewichtsprozent, sehr bevorzugt von 0 bis 0,2 Trockengewichtsprozent, bezogen auf das Trockengewicht des Mineralfüllstoffes, eines von dem amphiphilen Copolymer verschiedenen Verträglichkeitsvermittlers, wobei dieser Verträglichkeitsvermittler bevorzugt eine Fettsäure mit von 8 bis 20 Kohlenstoffatomen ist, wobei die Säure bevorzugt aus Stearinsäure und ihren Salzen ausgewählt ist.

7. Verwendung nach einem der Ansprüche 1 bis 6, **dadurch gekennzeichnet, dass** das chlorierte thermoplastische Harz ausgewählt ist aus PVC, chloriertem Polyvinylchlorid (CPVC), chloriertem Polyethylen, Copolymeren des PVC-Polyvinylacetat-Typs (PVC-PVAC) sowie Mischungen davon.

8. Verwendung nach einem der Ansprüche 1 bis 7, **dadurch gekennzeichnet, dass** der Mineralfüllstoff ausgewählt ist aus natürlichem oder synthetischem Calciumcarbonat, den Dolomiten, Kalkstein, Kaolin, Talk und Mischungen davon, und ist bevorzugt ein natürliches oder synthetisches Calciumcarbonat.

9. Verwendung nach einem der Ansprüche 1 bis 8, **dadurch gekennzeichnet, dass** das lineare, amphiphile Copolymer in einem Mahlschritt des Mineralfüllstoffes eingesetzt wird, wobei das Vermahlen ein Trocken- oder ein Nassmahlen ist, gefolgt von einem Trocknen, und wird bevorzugt eingesetzt während einem Nassvermahlen des Mineralfüllstoffes, gefolgt von einem Trocknen.

10. Verwendung nach einem der Ansprüche 1 bis 9, **dadurch gekennzeichnet, dass** der Mineralfüllstoff einen mittleren Durchmesser, gemessen durch einen Sedigraph™ 5100, von zwischen 0,5 und 5 µm aufweist, und bevorzugt zwischen 0,6 µm und 1,5 µm.

11. Verwendung nach einem der Ansprüche 1 bis 10, **dadurch gekennzeichnet, dass** der Mineralfüllstoff einen Gewichtsanteil an Partikeln mit einem Durchmesser kleiner 2 µm, gemessen mit einen Sedigraph™ 5100, aufweist, der zwischen 10 % und 99 % liegt, bevorzugt zwischen 50 % und 95 %, und bevorzugter zwischen 60 % und 90 %.

12. Verwendung nach Anspruch 6, **dadurch gekennzeichnet, dass** die chlorierte und gefüllte thermoplastische Zusammensetzung durch ein Verfahren gebildet wird, das wenigstens einen Trockenmischschritt der Komponenten (a) bis (e) einsetzt.

13. Verwendung nach einem der Ansprüche 1 bis 12, **dadurch gekennzeichnet, dass** die chlorierte und gefüllte thermoplastische Zusammensetzung durch ein Verfahren gebildet wird, das wenigstens einen Transformationsschritt durch Extrusion oder Spritzgiessen einsetzt.

14. Verwendung nach einem der Ansprüche 1 bis 13, **dadurch gekennzeichnet, dass** die chlorierte und gefüllte thermoplastische Zusammensetzung durch ein Verfahren gebildet wird, das einen Schritt bei einer Temperatur zwischen 150 und 250°C einsetzt, und bevorzugt zwischen 180 und 220°C.

15. Verfahren zur Herstellung einer chlorierten und gefüllten thermoplastischen Zusammensetzung, die wenigstens ein chloriertes thermoplastisches Harz und wenigstens einen Mineralfüllstoff enthält, wobei das Verfahren umfasst:
a) wenigstens einen Mahlschritt des Mineralfüllstoffes,
b) gefolgt durch wenigstens einen Schritt, bei dem der in Schritt a) erhaltene vermahlene Mineralfüllstoff in das thermoplastische Harz eingebracht wird,
**dadurch gekennzeichnet, dass** es im Verlauf von Schritt a) ein lineares, amphiphiles Copolymer einsetzt:
- bestehend aus wenigstens einem hydrophilen Monomer und wenigstens einem hydrophoben Monomer,
- und mit einer gewichtsgemittelten molaren Masse von zwischen 5 000 g/mol und 20 000 g/mol und einem Polymolekularitätsindex von kleiner oder gleich 3 aufweist, und bevorzugt einer gewichtsgemittelten molaren Masse von zwischen 10 000 g/mol und 15 000 g/mol und einem Polymolekularitätsindex von kleiner oder gleich 2,5.

16. Verfahren nach Anspruch 15, **dadurch gekennzeichnet, dass** das amphiphile Copolymer enthält, in Mol% pro Monomer, zwischen 60 % und 95 % eines hydrophilen Monomers und von 5 % bis 40 % eines hydrophoben Monomers, bevorzugt zwischen 70 % und 90 % eines hydrophilen Monomers und von 10 % bis 30 % eines hydrophoben Monomers.

17. Verfahren nach Anspruch 15 oder 16, **dadurch gekennzeichnet, dass** das hydrophile Co-Monomer ausgewählt ist aus Acrylsäure, Methacrylsäure sowie den Mischungen dieser Monomere.

18. Verfahren nach einem der Ansprüche 15 bis 17, **dadurch gekennzeichnet, dass** das hydrophobe Co-Monomer ausgewählt ist aus den Styrolen und den Alkylacrylaten sowie den Mischungen davon, einschliesslich insbesondere Butylstyrol und Butylacrylat.

19. Verfahren nach einem der Ansprüche 15 bis 18, **dadurch gekennzeichnet, dass** das lineare, amphiphile Copolymer eine statistische Struktur oder eine Blockstruktur aufweist.

20. Verfahren nach einem der Ansprüche 15 bis 19, **dadurch gekennzeichnet, dass** die chlorierte und gefüllte thermoplastische Zusammensetzung enthält, bezogen auf ihr Gesamtgewicht:
(a) von 0,1 bis 99 Trockengewichtsprozent wenigstens eines chlorierten thermoplastischen Harzes,
(b) von 0,1 bis 90 Trockengewichtsprozent, bevorzugt von 5 bis 50 Trockengewichtsprozent wenigstens eines Mineralfüllstoffes,
(c) von 0,01 bis 5 Trockengewichtsprozent, bevorzugt von 0,1 bis 3 Trockengewichtsprozent des linearen, amphiphilen Copolymers,
(d) von 0 bis 20 Trockengewichtsprozent, bevorzugt von 5 bis 20 Trockengewichtsprozent eines Wärmestabilisators und/oder eines UV-Stabilisators und/oder eines Schmiermittels und/oder eines Rheologiemodifizierungsmittels und/oder eines Schlagzähigkeitsverbesserers und/oder eines Verarbeitbarkeitsmittels, der bzw. das nicht das amphiphile Copolymer ist,
(e) von 0 bis 3 Trockengewichtsprozent, bevorzugt von 0 bis 1 Trockengewichtsprozent, sehr bevorzugt von 0 bis 0,5 Trockengewichtsprozent, äusserst bevorzugt von 0 bis 0,2 Trockengewichtsprozent, bezogen auf das Trockengewicht des Mineralfüllstoffes, eines von dem amphiphilen Copolymer verschiedenen Verträglichkeitsvermittlers, wobei dieser Verträglichkeitsvermittler bevorzugt eine Fettsäure mit von 8 bis 20 Kohlenstoffatomen ist, wobei die Säure bevorzugt aus Stearinsäure und ihren Salzen ausgewählt ist.

21. Verfahren nach einem der Ansprüche 15 bis 20, **dadurch gekennzeichnet, dass** das chlorierte thermoplastische Harz ausgewählt ist aus PVC, chloriertem Polyvinylchlorid (CPVC), chloriertem Polyethylen, Copolymeren des PVC-Polyvinylacetat-Typs (PVC-PVAC) sowie Mischungen davon.

22. Verfahren nach einem der Ansprüche 15 bis 21, **dadurch gekennzeichnet, dass** der Mineralfüllstoff ausgewählt ist aus natürlichem oder synthetischem Calciumcarbonat, den Dolomiten, Kalkstein, Kaolin, Talk und Mischungen davon, und ist bevorzugt ein natürliches oder synthetisches Calciumcarbonat.

23. Verfahren nach einem der Ansprüche 15 bis 22, **dadurch gekennzeichnet, dass** Schritt a) ein Trocken- oder ein Nassmahlschritt ist, gefolgt von einem Trocknen, und bevorzugt ein Nassvermahlen des Mineralfüllstoffes, gefolgt von einem Trocknen.

24. Verfahren nach einem der Ansprüche 15 bis 23, **dadurch gekennzeichnet, dass** der Mineralfüllstoff einen mittleren Durchmesser, gemessen durch einen Sedigraph™ 5100, von zwischen 0,5 und 5 µm aufweist, und bevorzugt zwischen 0,6 µm und 1,5 µm.

25. Verfahren nach einem der Ansprüche 15 bis 24, **dadurch gekennzeichnet, dass** der Mineralfüllstoff einen Gewichtsanteil an Partikeln mit einem Durchmesser kleiner 2 µm, gemessen mit einen Sedigraph™ 5100, aufweist, der zwischen 10 % und 99 % liegt, bevorzugt zwischen 50 % und 95 %, und bevorzugter zwischen 60 % und 90 %.

26. Verfahren nach einem der Ansprüche 15 bis 25, **dadurch gekennzeichnet, dass** Schritt b) von wenigstens einem Transformationsschritt c) durch Extrusion oder Spritzgiessen gefolgt wird.

27. Verfahren nach Anspruch 26, **dadurch gekennzeichnet, dass** Schritt c) bei einer Temperatur zwischen 150 und 250°C durchgeführt wird, und bevorzugt zwischen 180 und 220°C.

28. Chlorierte und gefüllte thermoplastische Zusammensetzung, erhalten durch das Verfahren gemäss einem der Ansprüche 15 bis 27.

## Claims

1. The use, in a chlorinated and filled thermoplastic composition containing at least one chlorinated thermoplastic resin and at least one mineral filler, as an agent improving the thermal stability and UV resistance of the said composition, of a linear amphiphilic copolymer **characterized in that**:
- it consists of at least one hydrophilic monomer and at least one hydrophobic monomer,
- it has an average molar mass by weight of between 5,000 g/mol and 20,000 g/mol and a polymolecularity index less than or equal to 3, and preferentially an average molar mass by weight of between 10,000 g/mol and 15,000 g/mol, and a polymolecularity index less than or equal to 2.5.

2. The use, according to claim 1, **characterized in that** the said amphiphilic copolymer contains, in mole % of each monomer, between 60% and 95% of hydrophilic monomer and 5% to 40% of hydrophobic monomer, preferentially between 70% and 90% of hydrophilic monomer and 10% to 30% of hydrophobic monomer.

3. The use, according to one of the claims 1 or 2, **characterized in that** the hydrophilic comonomer is chosen from among acrylic acid, methacrylic acid and the blends of these monomers.

4. The use, according to claims 1 to 3, **characterized in that** the hydrophobic comonomer is chosen from among the styrenes and the alkyl acrylates and blends thereof, including specifically butyl styrene and butyl acrylate.

5. The use, according to one of the claims 1 to 4, **characterized in that** the said linear amphiphilic copolymer has a random structure or a block structure.

6. The use, according to one of the claims 1 to 5, **characterized in that** the chlorinated filled thermoplastic composition contains, in relation to its total weight:
(a) from 0.1 to 99% by dry weight of at least one chlorinated thermoplastic resin,
(b) from 0.1 to 90%, preferentially from 5 to 50% by dry weight of at least one mineral filler,
(c) from 0.01 to 5%, preferentially from 0.1 to 3% by dry weight of the said linear amphiphilic copolymer,
(d) from 0 to 20%, preferentially from 5 to 20% by dry weight of a heat stabilizer and/or a UV stabilizer and/or a lubricant and/or a rheology modifier and/or an impact modifier and/or a processability agent that is not the said amphiphilic copolymer,
(e) from 0 to 3%, preferentially from 0 to 1%, very preferentially from 0 to 0.5%, extremely preferentially from 0 to 0.2% by dry weight with respect to the dry weight of the mineral filler, of a compatibilizer other than the said amphiphilic copolymer, this compatibilizer being preferentially a fatty acid with from 8 to 20 carbon atoms, the said acid being preferentially selected from stearic acid and its salts.

7. The use, according to one of the claims 1 to 6, **characterized in that** the chlorinated thermoplastic resin is chosen from among PVC, chlorinated polyvinyl chloride (CPVC), chlorinated polyethylene, copolymers of type PVC-polyvinyl acetate (PVC-PVAC) and blends thereof.

8. The use, according to one of the claims 1 to 7, **characterized in that** the mineral filler is chosen from among natural or synthetic calcium carbonate, the dolomites, limestone, kaolin, talc and blends thereof, and is a preferentially a natural or synthetic calcium carbonate.

9. The use, according to one of the claims 1 to 8, **characterized in that** the said linear amphiphilic copolymer is implemented in a grinding step of the said mineral filler, the said grinding being a dry grinding or a wet grinding step followed by a drying, and preferentially is implemented during a wet grinding of the said mineral filler followed by a drying.

10. The use, according to one of the claims 1 to 9, **characterized in that** the said mineral filler has an average diameter measured by a Sedigraph™ 5100 of between 0.5 and 5 µm, and preferentially between 0.6 µm and 1.5 µm.

11. The use, according to one of the claims 1 to 10, **characterized in that** the said mineral filler has a percentage by weight of particles with a diameter less than 2 µm, as measured by a Sedigraph™ 5100 ranging between 10% and 99%, preferentially between 50% and 95%, and more preferentially between 60% and 90%.

12. The use, according to claim 6, **characterized in that** the chlorinated and filled thermoplastic composition is formed by a process implementing at least one dry blending step of components (a) to (e).

13. The use, according to one of the claims 1 to 12, **characterized in that** the said chlorinated and filled thermoplastic composition is formed by a process implementing at least one transformation step by extrusion or injection moulding.

14. The use, according to one of the claims 1 to 13, **characterized in that** the chlorinated and filled thermoplastic composition is formed by a process implementing at least one step at a temperature between 150 and 250°C, and preferentially between 180 and 220°C.

15. Manufacturing process for a chlorinated and filled thermoplastic composition containing at least one chlorinated thermoplastic resin and at least one mineral filler including:
a) at least one grinding step of the said mineral filler,
b) followed by at least one step of incorporating in the thermoplastic resin the ground mineral filler obtained in step a),
**characterized in that** it implements in the course of step a) a linear amphiphilic copolymer:
- consisting of at least one hydrophilic monomer and at least one hydrophobic monomer,
- and having an average molar mass by weight of between 5,000 g/mol and 20,000 g/mol and a polymolecularity index less than or equal to 3, and preferentially an average molar mass by weight of between 10,000 g/mol and 15,000 g/mol, and a polymolecularity index less than or equal to 2.5.

16. Process according to claim 15, **characterized in that** the said amphiphilic copolymer contains, in mole % of each monomer, between 60% and 95% of hydrophilic monomer and 5% to 40% of hydrophobic monomer, preferentially between 70% and 90% of hydrophilic monomer and 10% to 30% of hydrophobic monomer.

17. Process according to claims 15 or 16, **characterized in that** the hydrophilic comonomer is chosen from among acrylic acid, methacrylic acid and the blends of these monomers.

18. Process according to one of the claims 15 to 17, **characterized in that** the hydrophobic comonomer is chosen from among the styrenes and the alkyl acrylates and blends thereof, including specifically butyl styrene and butyl acrylate.

19. Process according to one of the claims 15 to 18, **characterized in that** the said linear amphiphilic copolymer has a random structure or a block structure.

20. Process according to one of the claims 15 to 19, **characterized in that** the chlorinated filled thermoplastic composition contains, in relation to its total weight:
(a) from 0.1 to 99% by dry weight of at least one chlorinated thermoplastic resin,
(b) from 0.1 to 90%, preferentially from 5 to 50% by dry weight of at least one mineral filler,
(c) from 0.01 to 5%, preferentially from 0.1 to 3% by dry weight of the said linear amphiphilic copolymer,
(d) from 0 to 20%, preferentially from 5 to 20% by dry weight of a heat stabilizer and/or a UV stabilizer and/or a lubricant and/or a rheology modifier and/or an impact modifier and/or a processability agent that is not the said amphiphilic copolymer,
(e) from 0 to 3%, preferentially from 0 to 1%, very preferentially from 0 to 0.5%, extremely preferentially from 0 to 0.2% by dry weight with respect to the dry weight of the mineral filler, of a compatibilizer other than the said amphiphilic copolymer, this compatibilizer being preferentially a fatty acid with from 8 to 20 carbon atoms, the said acid being preferentially selected from stearic acid and its salts.

21. Process according to one of the claims 15 to 20, **characterized in that** the chlorinated thermoplastic resin is chosen from among PVC, chlorinated polyvinyl chloride (CPVC), chlorinated polyethylene, copolymers of type PVC-polyvinyl acetate (PVC-PVAC) and blends thereof.

22. Process according to one of the claims 15 to 21, **characterized in that** the mineral filler is chosen from among natural or synthetic calcium carbonate, the dolomites, limestone, kaolin, talc and blends thereof, and is a preferentially a natural or synthetic calcium carbonate.

23. Process according to one of the claims 15 to 22, **characterized in that** step a) is a dry grinding step or a wet grinding step followed by a drying, and preferentially of a wet grinding of the said mineral filler followed by a drying.

24. Process according to one of the claims 15 to 23, **characterized in that** the said mineral filler has an average diameter measured by a Sedigraph™ 5100 of between 0.5 and 5 µm, and preferentially between 0.6 µm and 1.5 µm.

25. Process according to one of the claims 15 to 24, **characterized in that** the said mineral filler has a percentage by weight of particles with a diameter less than 2 µm, as measured by a Sedigraph™ 5100 ranging between 10% and 99%, preferentially between 50% and 95%, and more preferentially between 60% and 90%.

26. Process according to one of the claims 15 to 25, **characterized in that** step b) is followed by at least one step c) of transformation by extrusion or by injection moulding.

27. Process according to claim 26, **characterized in that** step c) is conducted at a temperature between 150 and 250°C and preferentially between 180 and 220°C.

28. Chlorinated and filled thermoplastic composition obtained by the process according one of the claims 15 to 27.
